# EUROPÄISCHE PATENTSCHRIFT

(11) **EP 2 031 277 B1**
(45) Veröffentlichungstag und Bekanntmachung des Hinweises auf die Patenterteilung: **15.02.2012**
(21) Anmeldenummer: 08104622.9
(22) Anmeldetag: 03.07.2008
(51) Int. Cl.: F16H 55/06, F16H 55/22

(54) **Kunststoffzahnrad, Getriebe mit einem Kunststoffrad sowie Herstellungsverfahren**
Plastic cog wheel, drive with a plastic wheel and method for producing same
Roue dentée en matière synthétique, transmission dotée d'une roue en matière synthétique et procédé de fabrication

(30) Priorität: 31.08.2007 DE 102007041530
(43) Veröffentlichungstag der Anmeldung: 04.03.2009
(73) Patentinhaber: ROBERT BOSCH GMBH, 70442 Stuttgart (DE)
(72) Erfinder: Niederer, Armin, 76137 Karlsruhe (DE); Bueyuekasik, Diyap, 77815 Buehl (DE); Ganter, Andrea, 77830 Buehlertal (DE); Krauth, Marco, 76547 Sinzheim (DE)

(56) Entgegenhaltungen:
- EP-A2- 1 167 825
- JP-A- 2006 044 306
- JP-A- 2006 321 326
- US-A- 5 404 060
- "Surface finish", SERVICE ENGINEERING BULLETIN ENGINE AUSTRALIA, 31. Januar 2011 (2011-01-31), XP002619318,

## Beschreibung

### Stand der Technik

Die Erfindung betrifft ein Kunststoffzahnrad, insbesondere ein Schneckenrad gemäß dem Oberbegriff des Anspruchs 1, ein Getriebe, insbesondere ein Schneckengetriebe, gemäß Anspruch 7 sowie ein Verfahren gemäß dem Oberbegriff des Anspruchs 8.

Aus der DE 10 2004 028 610 A1 ist ein Schneckengetriebe zum Verstellen von beweglichen Teilen in einem Kraftfahrzeug bekannt. Das Schneckengetriebe umfasst eine Getriebeschnecke und ein mit dieser kämmendes Schneckenrad. Bei dem Schneckenrad handelt es sich um ein Spritzgussteil aus Kunststoff mit einer glatten Verzahnungsoberfläche und einem Durchmesser von etwa 60 mm. Die gemittelte Rautiefe bekannter Spritzguss-Kunststoffzahnräder beträgt weniger als 1 µm. Zur Schmierung des Schneckengetriebes wird ein Serienfett eingesetzt. Um das Bauraumvolumen zu minimieren, bestehen Bestrebungen, Kunststoff-Schneckenräder mit einem geringeren Durchmesser einzusetzen. Bei Dauerlaufversuchen wurde dabei festgestellt, dass es bei Schneckenrädern mit einem geringeren Durchmesser zu einer Mangelschmierung an der Verzahnung des Schneckenrades kommt, wodurch es wiederum zu Totalausfällen des Schneckengetriebes kommen kann. Selbst der Einsatz von hochviskosen, kostenintensiven Spezialfetten führte lediglich zu einer teilweisen Verbesserung des Schmierverhaltens. Nachteilig bei dem Einsatz von hochviskosen Fetten ist die teilweise resultierende geringe Selbsthemmung des Schneckengetriebes, die bei einem Einsatz des Schneckengetriebes in einem Fensterverstellantrieb zu einem ungewollten, selbsttätigen Öffnen einer Fensterscheibe führen kann.

Mit der JP2006044306 A ist ein Getriebe eines elektrischen Lenkantriebs bekannt geworden, bei dem die Zahnflanken des Getrieberads eine arithmetische mittlere Rauigkeit Ra kleiner als 0,15 µm aufweisen, in denen Schmiermittel angeordnet ist. Dabei entspricht die arithmetische Rauigkeit Ra < 0,15 µm etwa einer gemittelten Rautiefe Rz < 1,1 µm.

### Offenbarung der Erfindung

### Technische Aufgabe

Der Erfindung liegt die Aufgabe zugrunde, ein verbessertes Zahnrad vorzuschlagen, durch dessen Einsatz eine Mangelschmierung vermieden und eine ausreichende Selbsthemmung eines mit einem derartigen Zahnrad ausgestatteten Getriebes sichergestellt wird. Ferner besteht die Aufgabe darin, ein entsprechend verbessertes Getriebe mit einem Zahnrad sowie ein Herstellungsverfahren für ein derartiges Zahnrad vorzuschlagen.

### Technische Lösung

Diese Aufgabe wird hinsichtlich des Zahnrades aus Kunststoff mit den Merkmalen des Anspruchs 1, hinsichtlich des Getriebes mit den Merkmalen des Anspruchs 7 und hinsichtlich des Herstellungsverfahrens mit den Merkmalen des Anspruchs 8 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen.

Der Erfindung liegt der Gedanke zugrunde, anstelle der bisher zum Einsatz kommenden Spritzguss-Kunststoffzahnräder mit einer glatten Zahnoberfläche ein Kunststoffzahnrad einzusetzen, bei dem die Oberfläche zumindest eines Zahnes, vorzugsweise sämtlicher Zähne, also der gesamten Verzahnung, so rau, d.h. strukturiert, ausgebildet ist, dass von der Zahnoberfläche ein Fettdepot gebildet wird. In diesem Fettdepot bleibt bisher zum Einsatz kommendes Standard-Serien-Schmierfett über die gesamte Lebensdauer eines Getriebes, das mit einem nach dem Konzept der Erfindung ausgebildeten Kunststoffzahnrad ausgestattet ist, haften und sorgt somit für eine ausreichende Schmierung.

Aufgrund der erfindungsgemäßen Ausgestaltung des Kunststoffzahnrades kann der Durchmesser des Zahnrades und somit das Bauraumvolumen eines mit einem derartigen Zahnrad ausgestatteten Getriebes reduziert werden. Ferner kann über die Wahl der Strukturierung bzw. Rauigkeit der Oberfläche die Selbsthemmung des Getriebes beeinflusst werden. Da, wie erwähnt, bei einem nach dem Konzept der Erfindung ausgebildeten Kunststoffzahnrad bisher übliche Serienfette eingesetzt werden können, werden negative Auswirkungen von hochviskosen und kostenintensiven Schmierfetten auf die Selbsthemmung eines mit einem derartigen Kunststoffzahnrad ausgestatteten Getriebe vermieden. Gute Schmierfett-Speicherresultate wurden mit gemittelten Rautiefen aus einem Wertebereich zwischen etwa 1,5 µm und etwa 15 µm erzielt, wobei die Leistung eines mit einem derartig ausgebildeten Kunststoffzahnrad ausgestatteten Antriebs bei steigender gemittelter Rautiefe abnimmt (sinkender Wirkungszrad). Für den Einsatz eines derartigen Kunststoffzahnrades in Fensterheberantrieben wurden optimale Schmierwerte in einem gemittelten Rautiefenbereich zwischen etwa 5 µm und etwa 10 µm, insbesondere zwischen etwa 4 µm und etwa 7 µm, ermittelt.

Besonders bevorzugt ist eine Ausführungsform des Kunststoffzahnrades, bei der die Oberfläche des Zahnrades eine gemittelte Rautiefe von größer als 2 um, aufweist. Die gemittelte Rautiefe (Zehnpunkthöhe) wird wie folgt ermittelt: Zunächst wird eine definierte Messstrecke auf der Oberfläche des zumindest einen Zahns in fünf gleichgroße Einzelmessstrecken eingeteilt. Von jeder dieser Einzelmessstrecken wird sodann die Differenz aus dem maximalen und dem minimalen Wert des Oberflächenprofils ermittelt. Aus den somit erhaltenen fünf Werten wird danach der die gemittelte Rautiefe bildende Mittelwert errechnet.

Zum Einbringen der ein Fettdepot bildenden Struktur in die Oberfläche des mindestens einen Zahnes gibt es unterschiedliche Möglichkeiten. Gemäß einer ersten Alternative wird ein, insbesondere im Spritzgussverfahren hergestelltes, Kunststoffzahnrad mit einer glatten Zahnoberfläche mit kugelförmigem Strahlgut bestrahlt. Gute Ergebnisse wurden dabei durch Bestrahlen mit Glaskugeln erzielt. In den hieraus resultierenden, gerundeten, muldenförmigen Vertiefungen kann herkömmliches Serien-Schmierfett optimal anhaften. Je nach gewünschter Rautiefe kann Strahlgut aus einem Durchmesserbereich zwischen etwa 50 µm und etwa 200 µm eingesetzt werden. Besonders bevorzugt ist der Einsatz von Strahlgut mit einem Teilchendurchmesser aus einem Bereich zwischen etwa 70 µm und etwa 150 µm. Bevorzugt wird kugelförmiges Strahlgut mit einem Teilchendurchmesser aus einem Bereich zwischen etwa 90 µm und etwa 110 µm eingesetzt.

Optimal geeignet für eine Serienfertigung eines nach dem Konzept der Erfindung ausgebildeten Kunststoffzahnrades ist eine zweite, alternative Herstellungsmethode, nach der die Oberfläche des mindestens einen Zahnes des Kunststoffzahnrades bereits beim Spritzgießen durch eine entsprechende Strukturierung der Oberfläche des Spritzgusswerkzeuges erzeugt wird. Dabei weist das Spritzgusswerkzeug mit Vorteil eine negative, d.h. formkongruente, Struktur zur späteren Struktur der Oberfläche des mindestens einen Zahnes des Kunststoffzahnrades auf. Der Einsatz eines derart strukturierten Spritzgusswerkzeuges ist für Rauigkeiten mit einer gemittelten Rautiefe von maximal 5 µm empfehlenswert. Bei größeren Rautiefen von mehr als 5 µm besteht die Gefahr, dass sich das Kunststoffzahnrad nur schwer aus dem Spritzgusswerkzeug entformen lässt und dass Kunststoffreste in der Oberflächenstruktur des Spritzgusswerkzeuges zurückbleiben. Zur Erzielung dieser höheren Oberflächenrauhigkeiten empfiehlt sich die zusätzliche oder alternative unmittelbare Bestrahlung des spritzgegossenen Kunststoffzahnrades mit kugelförmigem Strahlgut. Zur Strukturierung des Spritzgusswerkzeuges wird vorgeschlagen, dieses durch Bestrahlen mit kugelförmigem Strahlgut zu strukturieren, wobei besonders bevorzugt Glaskugeln als Strahlgut eingesetzt werden. Gute Ergebnisse wurden mit einem kugelförmigen Strahlgut, dessen Teilchendurchmesser im Bereich zwischen etwa 50 µm und etwa 200 µm liegt, erzielt. Besonders bevorzugt ist der Einsatz von kugelförmigem Strahlgut mit einem Teilchendurchmesser aus einem Bereich zwischen etwa 70 µm und etwa 150 µm. Besonders bevorzugt wird kugelförmiges Strahlgut mit einem Teilchendurchmesser aus einem Bereich zwischen etwa 90 µm und etwa 110 µm zur Strukturierung der Spritzgusswerkzeugoberfläche eingesetzt.

Von besonderem Vorteil ist eine Ausführungsform des Kunststoffzahnrades mit einem Außendurchmesser aus einem Bereich zwischen etwa 35 mm und etwa 50 mm. Bevorzugt beträgt der Durchmesser eines derartigen Zahnrades etwa 40 mm. Mittels derartiger, kleiner Zahnräder kann der Bauraumbedarf erheblich reduziert werden. Besonders bevorzugt ist das Zahnrad dabei als Schnecken-Stirnrad mit einer schrägen Außenverzahnung ausgestattet.

Besonders gute Ergebnisse in Bezug auf die Funktionalität und die Einsparung von Bauraum wurden bei einem Kunststoffzahnrad erhalten, das zwischen etwa 40 und 50 Zähne, vorzugsweise etwa 45 Zähne aufweist. Besonders bevorzugt ist dabei die Oberfläche sämtlicher Zähne aufgeraut.

Die Erfindung führt auch auf ein Getriebe, vorzugsweise ein Schneckengetriebe mit mindestens einem nach dem Konzept der Erfindung ausgebildeten Kunststoffzahnrad mit einer ein Fettdepot bildend strukturierten Zahnoberfläche. Besonders bevorzugt handelt es sich bei dem Getriebe um ein Getriebe eines Antriebs für eine Kraftfahrzeuganwendung, insbesondere für einen Fensterhebermechanismus, eine Sitzverstelleinrichtung oder einen Schiebedachantrieb.

Ferner führt die Erfindung auf ein Verfahren zum Einbringen einer ein Fettdepot bildenden Struktur in eine Oberfläche mindestens eines Zahnes eines Kunststoffzahnrades. Gemäß der Erfindung ist vorgesehen, dass das Kunststoffzahnrad unmittelbar mit, insbesondere kugelförmigem, Strahlgut bestrahlt wird und/oder das Kunststoffzahnrad bereits während des Spritzgussprozesses im Spritzgusswerkzeug durch eine entsprechend strukturierte Spritzgusswerkzeugoberfläche ein Fettdepot bildend strukturiert wird. Die hierzu notwendige Negativ-Struktur des Spritzgusswerkzeugs kann beispielsweise durch Bestrahlen mit Strahlgut und/oder durch Erodieren und/oder durch Ätzen eingebracht werden.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: einen Längsschnitt durch eine Getriebe-Antriebs-Einheit, die Teil einer Fensterverstelleinrichtung in einem Kraftfahrzeug ist und
- Fig. 2:: eine vergrößerte Detailaufnahme der Oberfläche von Zäh- nen des in der Getriebe-Antriebs-Einheit gemäß Fig. 1 eingesetzten, als Schneckenrad ausgebildeten Zahnrades.

### Ausführungsformen der Erfindung

In den Figuren sind gleiche Bauteile und Bauteile mit der gleichen Funktion mit den gleichen Bezugszeichen gekennzeichnet.

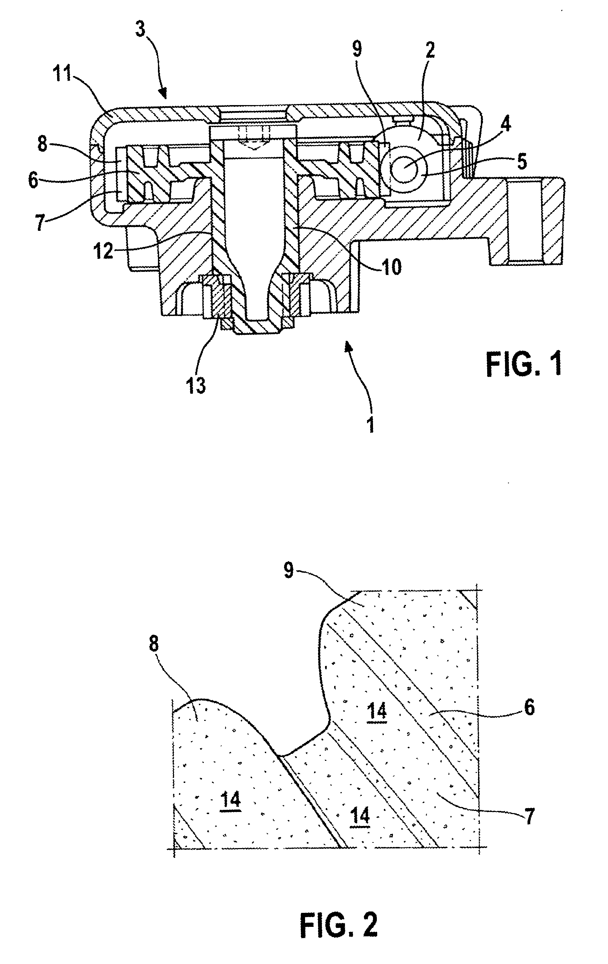

In Fig. 1 ist ein Längsschnitt durch eine Getriebe-Antriebs-Einheit 1 dargestellt. Die Getriebe-Antriebs-Einheit 1 umfasst einen elektromotorischen Antrieb 2 und ein von diesem angetriebenes, als Schneckengetriebe ausgebildetes Getriebe 3.

Auf einer fliegend gelagerten Abtriebswelle 4, die von dem elektromotorischen Antrieb 2 angetrieben wird, sitzt drehfest eine Getriebeschnecke 5 aus Metall. Diese ist in Eingriff mit einer am Außenumfang eines als Schneckenrad ausgebildeten Zahnrades 6 aus Kunststoff angeordneten Verzahnung 7, die aus einer Vielzahl von in Umfangsrichtung nebeneinander angeordneten Zähnen 8, 9 gebildet ist. Die Oberfläche 14 der gesamten Verzahnung des Zahnrades 6 ist, wie aus Fig. 2 ersichtlich, aufgeraut und bildet somit ein Depot für Serienfett. Das Zahnrad 6 ist als Kunststoff-Spritzgussteil ausgebildet und weist in seiner Mitte einen zylinderförmigen, axialen Fortsatz 10 auf, der sich axial durch ein Gehäuse 11 erstreckt, in dem das Getriebe 3 sowie der elektromotorische Antrieb 2 angeordnet sind. Der axiale Fortsatz 10 ist als Hohlwelle mit einer äußeren Oberfläche 12 ausgebildet, die als radiale Lagerfläche für das Zahnrad 6 dient. Der Außendurchmesser des Zahnrades 6 beträgt im gezeigten Ausführungsbeispiel 40 mm.

Von dem Zahnrad 6 wird ein Abtriebsritzel 13 angetrieben, welches mit einem nicht gezeigten Verstellmechanismus in einem Kraftfahrzeug zusammenwirkt.

In Fig. 2 ist ein Ausschnitt der Verzahnung 7 des Zahnrades 6 in einer vergrößerten Darstellung gezeigt. Zu erkennen sind ausschnittsweise zwei in Umfangsrichtung nebeneinander angeordnete Zähne 8, 9, deren Oberfläche 14 derart aufgeraut, d.h. strukturiert, ist, dass sie ein Fettdepot für Serienfett bildet. Die gemittelte Rautiefe der Oberfläche beträgt in dem gezeigten Ausführungsbeispiel etwa 4 µm. Die Struktur der Oberfläche 14 stellt sicher, dass über die gesamte Lebensdauer der Getriebe-Antriebs-Einheit 1 ausreichend Schmierfett im Eingriffsbereich zwischen der Getriebeschnecke 5 und dem Zahnrad 6 aus Kunststoff vorgesehen ist, wodurch ein Ausfall des Getriebes mit Vorteil vermieden wird.

## Patentansprüche

1. Kunststoffzahnrad, insbesondere Schneckenrad, mit in Umfangsrichtung nebeneinander angeordneten Zähnen (8, 9),
wobei die Oberfläche (14) mindestens eines der Zähne (8, 9) ein Fettdepot bildend strukturiert ist, **dadurch gekennzeichnet,**
**dass** die gemittelte Rautiefe (Rz) der Oberfläche (14) zwischen etwa 1,5 µm und etwa 15 µm, vorzugsweise zwischen etwa 5 µm und etwa 10 µm beträgt.

2. Kunststoffzahnrad nach Anspruch 1,
**dadurch gekennzeichnet,**
**dass** die gemittelte Rautiefe (Rz) der Oberfläche (14) größer als 2 µm ist.

3. Kunststoffzahnrad nach einem der Ansprüche 1 oder 2,
**dadurch gekennzeichnet,**
**dass** die Struktur der Oberfläche (14) durch Bestrahlen mit, vorzugsweise kugelförmigem, Strahlgut, insbesondere mit Glaskugeln, vorzugsweise mit einem mittleren Durchmesser aus einem Bereich zwischen etwa 50µm und etwa 200 µm, bevorzugt aus einem Bereich zwischen etwa 70 µm und etwa 150 µm, besonders bevorzugt aus einem Bereich zwischen etwa 90 µm und etwa 110 µm hergestellt ist.

4. Kunststoffzahnrad nach einem der vorhergehenden Ansprüche,
**dadurch gekennzeichnet,**
**dass** die Struktur der Oberfläche (14) mittels eines Spritzgusswerkzeugs beim Spritzgießen des Zahnrades (6) hergestellt ist, wobei die Oberfläche des Spritzgusswerkzeugs mit einer Negativ-Struktur versehen ist, die vorzugsweise durch Bestrahlen mit, insbesondere kugelförmigem, Strahlgut, bevorzugt mit Glaskugeln, vorzugsweise mit einem mittleren Durchmesser aus einem Bereich zwischen etwa 50 µm und etwa 200 um, bevorzugt aus einem Bereich zwischen etwa 70 µm und etwa 150 µm, besonders bevorzugt aus einem Bereich zwischen etwa 90 µm und etwa 110 µm hergestellt ist.

5. Kunststoffzahnrad nach einem der vorhergehenden Ansprüche,
**dadurch gekennzeichnet,**
**dass** der Durchmesser des Zahnrades (6) zwischen etwa 35 mm und etwa 50 mm, vorzugsweise etwa 40 mm beträgt.

6. Kunststoffzahnrad nach einem der vorhergehenden Ansprüche,
**dadurch gekennzeichnet,**
**dass** zwischen etwa 30 und 100, vorzugsweise etwa 45 Zähne (8, 9) vorgesehen sind.

7. Getriebe, insbesondere Schneckengetriebe, vorzugsweise für Kraftfahrzeuganwendungen, mit mindestens einem Zahnrad (6) nach einem der vorhergehenden Ansprüche.

8. Verfahren zum Einbringen einer ein Fettdepot bildenden Struktur in eine Oberfläche (12, 14) mindestens eines Zahnes (8, 9) eines Kunststoffzahnrades (6),
**gekennzeichnet durch**
- Bestrahlen des Kunststoffzahnrades (6) mit, insbesondere kugelförmigem Strahlgut und/oder
- Spritzgießen des Kunststoffzahnrades (6) in einem Spritzgusswerkzeug mit einer eine Negativ-Struktur aufweisenden Oberfläche (12, 14), die vorzugsweise durch Bestrahlen mit, insbesondere kugelförmigem, Strahlgut und/oder **durch** Erodieren und/oder **durch** Ätzen hergestellt ist.

## Claims

1. Plastic toothed wheel, in particular a worm wheel, comprising teeth (8, 9) arranged alongside one another in the circumferential direction,
wherein the surface (14) of at least one of the teeth (8, 9) has a structure forming a grease depot, **characterized**
**in that** the mean surface roughness (Rz) of the surface (14) is between approximately 1.5 µm and approximately 15 µm, preferably between approximately 5 µm and approximately 10 µm.

2. Plastic toothed wheel according to Claim 1,
**characterized**
**in that** the mean surface roughness (Rz) of the surface (14) is greater than 2 µm.

3. Plastic toothed wheel according to either of Claims 1 and 2,
**characterized**
**in that** the structure of the surface (14) is produced by blasting with, preferably spherical, blasting media, in particular with glass beads, preferably having a mean diameter from a range between approximately 50 µm and approximately 200 µm, preferably from a range between approximately 70 µm and approximately 150 µm, and particularly preferably from a range between approximately 90 µm and approximately 110 µm.

4. Plastic toothed wheel according to one of the preceding claims,
**characterized**
**in that** the structure of the surface (14) is produced by means of an injection moulding tool during the injection moulding of the toothed wheel (6), wherein the surface of the injection moulding tool is provided with a negative structure which is preferably produced by blasting with, in particular spherical, blasting media, preferably with glass beads, preferably having a mean diameter from a range between approximately 50 µm and approximately 200 µm, preferably from a range between approximately 70 µm and approximately 150 µm, and particularly preferably from a range between approximately 90 µm and approximately 110 µm.

5. Plastic toothed wheel according to one of the preceding claims,
**characterized**
**in that** the diameter of the toothed wheel (6) is between approximately 35 mm and approximately 50 mm, preferably approximately 40 mm.

6. Plastic toothed wheel according to one of the preceding claims,
**characterized**
**in that** provision is made of between approximately 30 and 100, preferably approximately 45, teeth (8, 9).

7. Gear transmission, in particular a worm gear transmission, preferably for motor vehicle applications, having at least one toothed wheel (6) according to one of the preceding claims.

8. Method for introducing a structure forming a grease depot into a surface (12, 14) of at least one tooth (8, 9) of a plastic toothed wheel (6),
**characterized by**
- blasting the plastic toothed wheel (6) with, in particular spherical, blasting media, and/or
- injection moulding the plastic toothed wheel (6) in an injection moulding tool having a surface (12, 14) which has a negative structure and is preferably produced by blasting with, in particular spherical, blasting media and/or by erosion and/or by etching.

## Revendications

1. Roue dentée en matière synthétique, en particulier roue à denture hélicoïdale, qui présente des dents (8, 9) disposées les unes à côté des autres dans la direction périphérique, la surface (14) d'au moins l'une des dents (8, 9) étant structurée pour former un dépôt de graisse,
**caractérisée en ce que**
la profondeur moyenne de la rugosité (Rz) de la surface (14) est comprise entre environ 1,5 µm et environ 15 µm et de préférence entre environ 5 µm et environ 10 µm.

2. Roue dentée en matière synthétique selon la revendication 1, **caractérisée en ce que** la profondeur moyenne de la rugosité (Rz) de la surface (14) est supérieure à 2 µm.

3. Roue dentée en matière synthétique selon l'une des revendications 1 ou 2, **caractérisée en ce que** la structure de la surface (14) est obtenue en y projetant un matériau de projection, de préférence de forme sphérique, et en y projetant de préférence des billes de verre dont le diamètre moyen est de préférence compris dans la plage d'environ 50 µm à environ 200 µm, de préférence dans la plage d'environ 70 µm à environ 150 µm, et de façon particulièrement préférable dans la plage d'environ 90 µm à environ 110 µm.

4. Roue dentée en matière synthétique selon l'une des revendications précédentes, **caractérisée en ce que** la structure de la surface (14) est réalisée à l'aide d'un outil de moulage par injection lors du moulage par injection de la roue dentée (6), la surface de l'outil de moulage par injection étant dotée d'une structure négative obtenue de préférence en y projetant un matériau de projection, de préférence de forme sphérique, et en y projetant de préférence des billes de verre dont le diamètre moyen est de préférence compris dans la plage d'environ 50 µm à environ 200 µm, de préférence dans la plage d'environ 70 µm à environ 150 µm, et de façon particulièrement préférable dans la plage d'environ 90 µm à environ 110 µm.

5. Roue dentée en matière synthétique selon l'une des revendications précédentes, **caractérisée en ce que** le diamètre de la roue dentée (6) est compris entre environ 35 mm et environ 50 mm et est de préférence d'environ 40 mm.

6. Roue dentée en matière synthétique selon l'une des revendications précédentes, **caractérisée en ce que** d'environ 30 à 100 et de préférence environ 45 dents (8, 9) sont prévues.

7. Transmission, en particulier transmission hélicoïdale, de préférence destinée à des applications sur véhicules automobiles, et présentant au moins une roue dentée (6) selon l'une des revendications précédentes.

8. Procédé pour former une structure qui forme un dépôt de graisse dans une surface (12, 14) d'au moins une dent (8, 9) d'une roue dentée (6) en matière synthétique,
**caractérisé par** les étapes qui consistent à :
- projeter un matériau de projection en particulier de forme sphérique sur la roue dentée (6) en matière synthétique et/ou
- mouler par injection la roue dentée (6) en matière synthétique dans un outil de moulage par injection qui présente une surface (12, 14) dotée d'une structure négative obtenue de préférence en y projetant un matériau de projection, notamment sphérique, en l'érodant et/ou par gravure chimique.
